# EUROPEAN PATENT APPLICATION

(11) **EP 4 741 459 A1**
(43) Date of publication of application: **13.05.2026**
(21) Application number: 25845716.7
(22) Date of filing: 01.09.2025
(51) Int. Cl.: C08L 83/07, C08L 83/05, C08K 3/08, C08K 9/10

(54) **THERMALLY CONDUCTIVE SILICONE RUBBER AND PREPARATION METHOD THEREFOR**

(30) Priority: 30.08.2024 CN 202411206803
(71) Applicant: Beijing KMT Technology Co., Ltd., Beijing 100085 (CN)
(72) Inventor: LI, Zhenzhong, Beijing 100094 (CN); WANG, Yilin, Beijing 100094 (CN); DENG, Zuozhu, Beijing 100094 (CN)
(74) Representative: Petraz, Gilberto Luigi
(86) International application number: PCT/CN2025/118284
(87) International publication number: WO 2026/046401

(57) **Abstract**

The present invention relates to the technical field of thermally conductive silicone rubber, and specifically to a thermally conductive silicone rubber and preparation method thereof. The present invention proposes a thermally conductive silicone rubber and preparation method thereof. The thermally conductive silicone rubber comprises: vinyl terminated polydimethylsiloxane, vinyl MQ silicone resin, hydrogen-containing silicone oil, ethynyl cyclohexanol, and modified silver powder; wherein, the modified silver powder is a mixture containing silicone resin and silver powder. In the thermally conductive silicone rubber provided by the present invention, by using silver powder coated with silicone resin, the thermally conductive silicone rubber of the present invention has appropriate fluidity before curing and a high thermal conductivity, such that it can meet the market demand for the silicone rubber with ultra-high thermal conductivity. The thermally conductive silicone rubber provided by the present invention may be applied to heat dissipation components of structures such as light-emitting chips with ultra-high power, etc.

## Description

### Cross Reference to Related Applications

The present application claims the priority of Chinese Patent Application No. 202411206803.2 entitled "A thermally conductive silicone rubber and preparation method thereof" and filed on August 30, 2024, the entire content of which is incorporated herein by reference.

### Field of the Invention

The present invention relates to the technical field of thermally conductive silicone rubber, specifically to a thermally conductive silicone rubber and preparation method thereof.

### Background of the Invention

In prior art, a thermally conductive silicone rubber generally comprises polysiloxane as a base material and is filled with metal oxides as fillers. At present, the thermally conductive silicone rubber generally has a thermal conductivity of 0.5-8 W/(m•K). With continuous change in market demand, the requirements for the thermal conductivity of the thermally conductive silicone rubber has been increasingly improved. In order to meet the market demand, it is necessary to develop a silicone rubber with higher thermal conductivity. In the current research, it is attempted to fill the silicone rubber with metal (such as copper, silver, nickel, etc.) powders to improve the thermal conduction performance of the silicone rubber. However, due to the properties of the metal powders per se, adding metal powders to improve the thermal conductivity of the thermally conductive silicone rubber may result in that the fluidity of the thermally conductive silicone rubber before curing cannot meet the use requirements; or, the addition of metal powders will make the viscosity of the thermally conductive silicone rubber too high. These factors will make the preparation of the thermally conductive silicone rubber difficult or will limit the application fields of the thermally conductive silicone rubber.

Therefore, at present, it is necessary to provide a silicone rubber with fluidity before curing and high thermal conductivity.

### Summary of the Invention

In order to solve the above-mentioned problems in the prior art, the present invention provides a thermally conductive silicone rubber and preparation method thereof.

In a first aspect, the present invention provides a thermally conductive silicone rubber, comprising: vinyl terminated polydimethylsiloxane, vinyl MQ silicone resin, hydrogen-containing silicone oil, ethynyl cyclohexanol, and modified silver powder; wherein, the modified silver powder is a mixture containing silicone resin and silver powder.

As a specific embodiment of the present invention, at a temperature of 25 °C and a shear rate of 0.2S⁻¹, the thermally conductive silicone rubber of the present invention has a shear viscosity of 60000-100000 mPa•s. For example, the shear viscosity of the thermally conductive silicone rubber may be 60000 mPa•s, 70000 mPa•s, 80000 mPa•s, 90000 mPa•s, 100000 mPa•s, or within a range defined by the aforementioned values.

The shear viscosity of the thermally conductive silicone rubber in the present invention is tested by adopting a rheometer with a model of MCR102 from Anton Paar company.

As a specific embodiment of the present invention, the thermally conductive silicone rubber has a thermal conductivity of 10-18 W/(m•K), for example, the thermal conductivity of the thermally conductive silicone rubber may be 10 W/(m•K), 11 W/(m•K), 12 W/(m•K), 13 W/(m•K), 14 W/(m•K), 15 W/(m•K), 16 W/(m•K), 17 W/(m•K), 18 W/(m•K), or within a range defined by the aforementioned values.

In the present invention, the thermal conductivity of thermally conductive silicone rubber is tested by adopting a thermal conductometer with a model of TPS 500S from Hot Disk company, by using a transient plane heat source method.

As a specific embodiment of the present invention, as tested according to GBT 2411-2008 standard, the cured thermally conductive silicone rubber of the present invention has a hardness of 50-95 A. For example, the hardness of the cured thermally conductive silicone rubber is 50 A, 60 A, 70 A, 80 A, 90 A, 95 A, or within a range defined by the aforementioned values.

As a specific embodiment of the present invention, at a temperature of 25°C, the vinyl terminated polydimethylsiloxane has a dynamic viscosity of 200-500000 mPa•s, for example, the dynamic viscosity may be 200 mPa•s, 500 mPa•s, 1000 mPa•s, 1500 mPa•s, 2000 mPa•s, 3000 mPa•s, 4000 mPa•s, 5000 mPa•s, 6000 mPa•s, 7000 mPa•s, 8000 mPa•s, 9000 mPa•s, 10000 mPa•s, 15000 mPa•s, 20000 mPa•s, 25000 mPa•s, 30000 mPa•s, 35000 mPa•s, 40000 mPa•s, 45000 mPa•s, 50000 mPa•s, 100000 mPa•s, 200000 mPa•s, 300000 mPa•s, 400000 mPa•s, 500000 mPa•s, or within a range defined by the aforementioned values, and preferably within a range of 3000-20000 mPa•s. The dynamic viscosity of the vinyl terminated polydimethylsiloxane is tested by adopting a Brookfield viscometer with a model of DV2TRV from USA Brookfield company.

As a specific embodiment of the present invention, the vinyl MQ silicone resin has M units and Q units, wherein the M unit is a monofunctional siloxane segment represented by formula R₃SiO_{1/2}, and the Q unit is a tetrafunctional siloxane segment represented by formula SiO_{4/2}; and in each M unit, the three substituents R may be the same or different, each independently selected from hydrocarbon groups, preferably selected from C1-C3 alkyl and C2-C5 vinyl.

Examples of C1-C3 alkyl include but are not limited to: methyl, ethyl, and propyl. Similarly, examples of C2-C5 vinyl include but are not limited to vinyl and allyl.

In the present invention, the R in different M units of the vinyl MQ silicone resin may be the same or different, and the vinyl MQ silicone resin comprises M units containing vinyl.

In some embodiments, at a temperature of 25°C, a molar ratio of M units to Q units in the vinyl MQ silicone resin is 0.9-1.1, for example, the molar ratio of M units to Q units is 0.9, 0.95, 1, 1.1, or within a range defined by the aforementioned values.

The molar ratio of M units to Q units in the vinyl MQ silicone resin of the present invention may generally be determined by the feeding amount. The molar ratio of M units to Q units may be obtained by calculating an amount of substance of M monomers and an amount of substance of Q monomers. In the present invention, the terms "M monomer" and "Q monomer" refer to monomers that may be subjected to polymerization reaction to form corresponding M units and Q units.

For example, in the synthesis of vinyl MQ silicone resin using ethyl orthosilicate method, an amount of substance of M monomers is half of a sum of an amount of substance of hexamethyldisiloxane and an amount of substance of tetramethyldivinyldisiloxane, and an amount of substance of Q monomers is an amount of substance of ethyl orthosilicate.

As a specific embodiment of the present invention, the vinyl MQ silicone resin has a vinyl content of 0.0006-0.002 mol/g. For example, the vinyl content of vinyl MQ silicone resin may be 0.0006 mol/g, 0.0008 mol/g, 0.001 mol/g, 0.0012 mol/g, 0.0015 mol/g, 0.0018 mol/g, 0.002 mol/g, or within a range defined by the aforementioned values.

The vinyl content in the vinyl MQ silicone resin is generally determined based on the feeding amount during synthesis. First, an amount of substance of vinyl in the M monomers containing vinyl is calculated, and then it is divided by a total mass of the MQ silicone resin to obtain the vinyl content of the vinyl MQ silicone resin, in mmol/g.

For example, the vinyl MQ silicone resin is synthesized by adopting the ethyl orthosilicate method, by using hexamethyldisiloxane (x g), tetramethyldivinyldisiloxane (y g), and ethyl orthosilicate (z g). The vinyl content is calculated as follows: (y/93) ÷ (x+y+z × 0.288), where, 93 is half of a molar mass of tetramethyldivinyldisiloxane and 0.288 is a mass fraction of SiO_{4/2} in the ethyl orthosilicate (since the four ethoxy groups in the ethyl orthosilicate will be hydrolyzed, the Q segment only contains SiO_{4/2}).

In the present invention, the vinyl content in the vinyl MQ silicone resin may be measured by adopting an iodometric method. Specifically, the method for measuring the vinyl content in the vinyl MQ silicone resin comprises: adding excessive amount of iodine bromide to the vinyl MQ silicone resin to allow for addition reaction between iodine bromide and vinyl; and adding excessive amount of potassium iodide to react with unreacted iodine bromide to generate elemental iodine, titrating the elemental iodine with a standard solution of sodium thiosulfate, and performing calculation to obtain the vinyl content.

Specifically, a vinyl MQ silicone resin with a CAS of 68988-89-6 may be used in the present invention.

As a specific embodiment of the present invention, at a temperature of 25°C, the hydrogen-containing silicone oil has a dynamic viscosity of 10-200 mPa•s, for example, the dynamic viscosity may be 10 mPa•s, 50 mPa•s, 80 mPa•s, 100 mPa•s, 120 mPa•s, 150 mPa•s, 180 mPa•s, 200 mPa•s, or within a range defined by the aforementioned values, and preferably within a range of 15-50 mPa•s.

The dynamic viscosity of the hydrogen-containing silicone oil is tested by adopting a Brookfield viscometer with a model of DV2TRV from USA Brookfield company.

As a specific embodiment of the present invention, the hydrogen-containing silicone oil has a hydrogen content of 1.1 wt% to 1.3 wt%. For example, the hydrogen content in the hydrogen-containing silicone oil may be 1.1 wt%, 1.15 wt%, 1.2 wt%, 1.25 wt%, 1.3 wt%, or within a range defined by the aforementioned values.

As a specific embodiment of the present invention, the modified silver powder is a silver powder coated with silicone resin. In the present invention, the coating form is not particularly limited, and may be achieved by means of local adhesion, local covering, local wrapping, full wrapping, etc.

As a specific embodiment of the present invention, the silver powder has a particle diameter D50 of 1-5 µm, for example, the particle diameter D50 of the silver powder may be 1 µm, 2 µm, 3 µm, 4 µm, 5 µm, or within a range defined by the aforementioned values.

In the present invention, it is found that, when the silver powder has a particle diameter of is less than 1 µm, the viscosity of the prepared thermally conductive silicone rubber is too high to be suitable for practical applications, but when the silver powder has a particle diameter of greater than 5 µm, the thermal resistance of the prepared thermally conductive silicone rubber will be too large to be also suitable for practical applications.

As a specific embodiment of the present invention, the silicone resin has a softening point of 60-70°C, for example, the softening point of the silicone resin may be 60°C, 62°C, 65°C, 68°C, 70°C, or within a range defined by the aforementioned values.

In the present invention, it is found that, when the softening point of the silicone resin is 60-70°C, the viscosity before curing and the thermal conductivity of the prepared thermally conductive silicone rubber will meet the requirements for use. It is believed that, if the softening point of the silicone resin is below 60°C, during the temperature rise and curing process of thermally conductive silicone gel, the silicone resin has already been softened before the hydrosilylation reaction between the vinyl terminated polydimethylsiloxane, vinyl MQ silicone resin, and hydrogen-containing silicone oil occurs; and the softened silicone resin is prone to fall off from the surface of the silver powder, resulting in the failure of its wrapping to the silver powder, thereby affecting the thermal conductivity of the prepared silicone rubber. If the softening point of the silicone resin is higher than 70°C, since the hydrosilylation reaction has been completed, such that the silicone resin on the surface of the silver powder cannot form compatibility with the system, resulting in reduced thermal conductivity.

As a specific embodiment of the present invention, the silicone resin may be methylphenyl silicone resin. In the present invention, the silicone resin may be commercially available or may be self-made.

For example, the silicone resin is a reaction product of octamethylcyclotetrasiloxane, diphenyldimethoxysilane, and phenyltrimethoxysilane. A mass ratio of the octamethylcyclotetrasiloxane, diphenyldimethoxysilane, and phenyltrimethoxysilane may be 120-140:420-460:800-1200.

In the present invention, a method for preparing the silicone resin comprises:
(1) mixing and stirring the octamethylcyclotetrasiloxane, diphenyldimethoxysilane, phenyltrimethoxysilane, toluene, concentrated sulfuric acid, and water to obtain a mixed solution;
(2) allowing the mixed solution to stand to separate into an oil layer and a water layer, discarding the water layer, adjusting pH value of the oil layer, and filtering the resultant, drying, and crushing to obtain the silicone resin.

Preferably, the stirring in step (1) may be stirring at reflux, and the stirring at reflux is performed under conditions of: at a temperature of 70-80°C for 5-7 h.

Preferably, in step (1), an amount of the octamethylcyclotetrasiloxane is 120-140 parts by mass, an amount of diphenyldimethoxysilane is 420-460 parts by mass, an amount of phenyltrimethoxysilane is 800-1200 parts by mass, an amount of toluene is 600-1000 parts by mass, an amount of concentrated sulfuric acid is 24-34 parts by mass, and an amount of water is 420-600 parts by mass.

Preferably, in step (2), the pH value of the oil layer is adjusted to 6.5-7.5.

Preferably, in step (1), the water is deionized water or distilled water.

Preferably, in step (1), the concentrated sulfuric acid has a concentration of 97 wt% to 99 wt%, for example, the concentration of the concentrated sulfuric acid is 97 wt%, 98 wt%, 99 wt%, or within a range defined by the aforementioned values.

As a specific embodiment of the present invention, the modified silver powder comprises 80-120 parts by mass of silver powder and 4-6 parts by mass of silicone resin.

Preferably, the amount of the silver powder in the modified silver powder may be 80 parts by mass, 85 parts by mass, 90 parts by mass, 95 parts by mass, 100 parts by mass, 105 parts by mass, 110 parts by mass, 115 parts by mass, 120 parts by mass, or within a range defined by the aforementioned values.

Preferably, the amount of the silicon resin in the modified silver powder may be 4 parts by mass, 4.5 parts by mass, 5 parts by mass, 5.5 parts by mass, 6 parts by mass, or within a range defined by the aforementioned values.

As a specific embodiment of the present invention, a method for preparing the modified silver powder comprises: mixing the silicone resin, solvent, and silver powder, drying the resultant, and grinding to obtain modified silver powder.

Examples of the solvent suitable for use in the present invention include but are not limited to toluene. An amount of the solvent in the present invention is not particularly limited, as long as the silicone resin and silver powder may be fully mixed by the solvent. For example, the amount of the solvent may be 180-220 parts by weight, relative to 80-120 parts by weight of the silver powder.

As a specific embodiment of the present invention, in the preparation process of the modified silver powder, the grinding time is 8-10 h. Specifically, the grinding is carried out by using a ball mill.

As a specific embodiment of the present invention, the thermally conductive silicone rubber comprises 60-80 parts by mass of vinyl terminated polydimethylsiloxane, 20-40 parts by mass of vinyl MQ silicone resin, 3-5 parts by mass of hydrogen-containing silicone oil, 0.008-0.012 parts by mass of ethynyl cyclohexanol, and 350-700 parts by mass of modified silver powder.

The amount of the vinyl terminated polydimethylsiloxane in the thermally conductive silicone rubber may be 60 parts by mass, 65 parts by mass, 70 parts by mass, 75 parts by mass, or 80 parts by mass, or within a range defined by the aforementioned values.

The amount of the vinyl MQ silicone resin in thermally conductive silicone rubber may be 20 parts by mass, 25 parts by mass, 30 parts by mass, 35 parts by mass, 40 parts by mass, or within a range defined by the aforementioned values.

The amount of the hydrogen-containing silicone oil in thermally conductive silicone rubber may be 3 parts by mass, 3.5 parts by mass, 4 parts by mass, 4.5 parts by mass, 5 parts by mass, or within a range defined by the aforementioned values.

The amount of the ethynyl cyclohexanol in thermally conductive silicone rubber may be 0.008 parts by mass, 0.009 parts by mass, 0.01 parts by mass, 0.011 parts by mass, 0.012 parts by mass, or within a range defined by the aforementioned values.

The amount of modified silver powder in the thermally conductive silicone rubber may be 350 parts by mass, 400 parts by mass, 450 parts by mass, 500 parts by mass, 550 parts by mass, 600 parts by mass, 650 parts by mass, 700 parts, or within a range defined by the aforementioned values.

In a second aspect, the present invention provides a method for preparing thermally conductive silicone rubber, comprising: mixing vinyl terminated polydimethylsiloxane, vinyl MQ silicone resin, hydrogen-containing silicone oil, ethynyl cyclohexanol, and modified silver powder in the presence of a catalyst to obtain the thermally conductive silicone rubber.

As a specific embodiment of the present invention, the catalyst is a platinum complex.

As calculated based on the amount of platinum in the catalyst, the catalyst is used in an amount of 15-40 ppm of a total mass of other components in the thermally conductive silicone rubber except for the modified silver powder.

Specifically, the platinum complex is a polyvinyl siloxane platinum complex.

Specifically, the platinum complex catalyst is a Karstedt's platinum catalyst.

As a specific embodiment of the present invention, the mixing time for preparing the thermally conductive silicone rubber is 0.2-0.5 h.

As a specific embodiment of the present invention, the mixing method for preparing the thermally conductive silicone rubber is as follows: mixing, by using a three-roll mill or a planetary centrifugal mixer, the vinyl terminated polydimethylsiloxane, vinyl MQ silicone resin, hydrogen-containing silicone oil, ethynyl cyclohexanol, and modified silver powder to obtain a mixture, and allowing the mixture to mix in the three-roll mill or planetary centrifugal mixer for 0.2-0.5 h.

In the present invention, the defined amount for use generally refers to parts by mass, unless otherwise specified.

Compared with the prior art, the present invention may achieve the following beneficial effects.

In the thermally conductive silicone rubber provided by the present invention, by using silver powder coated with silicone resin, the thermally conductive silicone rubber provided by the present invention has appropriate fluidity before curing (when the shear rate is 0.2 S⁻¹, the viscosity of the thermally conductive silicone rubber in the present invention is 60000-100000 mPa•s) and a relatively high thermal conductivity. Based on this, the thermally conductive silicone rubber provided by the present invention can meet the market demand for the silicone rubber with ultra-high thermal conductivity.

The thermally conductive silicone rubber provided by the present invention may be applied to heat dissipation components of structures such as light-emitting chips with ultra-high power, etc.

### Detailed Description of the Embodiments

In the following, the present invention will be further illustrated in combination of specific examples, which do not constitute any limitation on the present invention.

All of the raw materials used in individual examples of the present invention were commercially available.

Among others, the octamethylcyclotetrasiloxane was purchased from Hoshine Silicon Industry Co., Ltd.;
the diphenyldimethoxysilane was purchased from Liaoning Sibond New Material Co., Ltd.;
the phenyltrimethoxysilane was purchased from Liaoning Sibond New Material Co., Ltd.;
the toluene was purchased from Beijing Yili Fine Chemicals Co., Ltd.;
the concentrated sulfuric acid (98wt%) was purchased from Beijing Yili Fine Chemicals Co., Ltd.;
the silver powder (having a particle diameter D50 of 2 µm) was purchased from Jiangsu Boqian New Materials Co., Ltd.;
the vinyl terminated polydimethylsiloxane (having a dynamic viscosity of 10000mPa•s at 25°C) was purchased from Shanghai Huazhirun Chemical Co., Ltd.;
the vinyl MQ silicone resin (having a molar ratio of M units to Q units of 1.05 and a vinyl content of 0.001 mol/g) was purchased from Chengdu Boda Aifluo Technology Co., Ltd., with a model of 8201;
the hydrogen-containing silicone oil (having a dynamic viscosity of 25 mPa•s at 25°C) was purchased from Jiangxi Hito Silicone Materials Co.,Ltd.;
the ethynyl cyclohexanol (CAS. 78-27-3) was purchased from Bailingwei Technology Co., Ltd.;
the platinum complex catalyst (CAS. 68478-92-2) was purchased from Shanghai vivo Chemical Co., Ltd., and before use, the platinum complex catalyst was diluted with vinyl terminated polydimethylsiloxane to a platinum concentration of 1 wt%.

### Synthesis of silicone resin

130 g of octamethylcyclotetrasiloxane, 440 g of diphenyldimethoxysilane, 1000 g of phenyltrimethoxysilane, 800 g of toluene, 29 g of concentrated sulfuric acid, and 510 g of deionized water were mixed and stirred under refluxing at 70°C for 6 h to obtain a mixed solution, the mixed solution was allowed to stand and cooled to room temperature, then the mixed solution was separated into an oil layer and a water layer, and the water layer was discarded; sodium bicarbonate was added to the oil layer to adjust the pH of the oil layer to 7, and the resultant was stirred at room temperature for 1 h, and filtered to obtain a mixture; and the mixture was dried and crushed to form the silicone resin.

A method for testing the softening point of the silicone resin is performed under the following conditions:
Apparatus: PerkinElmer Differential Scanning Calorimeter (DSC) with a Model of DSC6000;
Test procedure, comprising: heating from -85°C to 150°C at a temperature rise rate of 10 °C/min; and
using the DSC to measure a TG point, to obtain the softening point of the silicone resin, being 65.2 °C.

### Synthesis of modified silver powder

50 g of the above-prepared silicone resin and 2000 g of toluene were weighed, mixed and dissolved with stirring, and 1000 g of silver powder with a D50 value of 2 µm was added and stirred at room temperature for 8 h to obtain a mixture; and the mixture was dried and ground in a ball mill for 8 h to obtain the modified silver powder.

In a specific embodiment of the present invention, the synthesis steps for the synthesis of the above-mentioned silicone resin and the modified silver powder were repeated to obtain sufficient amounts of silicone resin and modified silver powder to be ready for use in examples and comparative examples.

### Example 1

70 g of vinyl terminated polydimethylsiloxane, 30 g of vinyl MQ silicone resin, 4.3 g of hydrogen-containing silicone oil with a hydrogen content of 1.2 wt%, 0.01 g of ethynyl cyclohexanol, 0.3 g of diluted platinum complex catalyst, 350 g of modified silver powder were weighed, and mixed in a three-roll mill for 0.5 h to obtain a thermally conductive silicone rubber.

### Example 2

60 g of vinyl terminated polydimethylsiloxane, 40 g of vinyl MQ silicone resin, 4.8 g of hydrogen-containing silicone oil with a hydrogen content of 1.1 wt%, 0.01 g of ethynyl cyclohexanol, 0.3 g of diluted platinum complex catalyst, 400 g of modified silver powder were weighed, and mixed in a three-roll mill for 0.5 h to obtain a thermally conductive silicone rubber.

### Example 3

80 g of vinyl terminated polydimethylsiloxane, 20 g of vinyl MQ silicone resin, 3.9 g of hydrogen-containing silicone oil with a hydrogen content of 1.3 wt%, 0.01 g of ethynyl cyclohexanol, 0.3 g of diluted platinum complex catalyst, 650 g of modified silver powder were weighed, and mixed in a three-roll mill for 0.5 h to obtain a thermally conductive silicone rubber.

### Example 4

60 g of vinyl terminated polydimethylsiloxane, 40 g of vinyl MQ silicone resin, 4.5 g of hydrogen-containing silicone oil with a hydrogen content of 1.2 wt%, 0.01 g of ethynyl cyclohexanol, 0.3 g of diluted platinum complex catalyst, 700 g of modified silver powder were weighed, and mixed in a three-roll mill for 0.5 h to obtain a thermally conductive silicone rubber.

### Comparative example 1

Comparative Example 1 was made based on Example 1. The difference between Comparative Example 1 and Example 1 was that, a silver powder with a D50 value of 2 µm was directly adopted in the preparation process of the thermally conductive silicone rubber. That is, the silver powder was not subjected to modification treatment.

### Comparative example 2

Comparative Example 2 was made based on Example 1. The difference between Comparative Example 2 and Example 1 was that, the synthesis process of modified silver powder was as follows:
50 g of silicone resin and 2000 g of toluene were stirred and dissolved; 1000 g of silver powder with a D50 value of 2 µm was added to obtain a mixture; and the mixture was stirred at room temperature for 8 h, dried, and ground and crushed to obtain the modified silver powder. A silicone resin with a softening point of 51.6 °C was selected.

The synthesis method of the silicone resin with a softening point of 51.6 °C was as follows: 130 g of octamethylcyclotetrasiloxane, 440 g of diphenyldimethoxysilane, 500 g of phenyltrimethoxysilane, 800 g of toluene, 29 g of concentrated sulfuric acid, and 510 g of deionized water were mixed and stirred under refluxing at 70 °C for 6 h to obtain a mixed solution; the mixed solution was allowed to stand and cooled to room temperature, then the mixed solution was separated into an oil layer and a water layer, and the water layer was discarded; sodium bicarbonate was added to the oil layer to adjust the pH of the oil layer to 7, and the resultant was stirred at room temperature for 1 h, and filtered to obtain a mixture; and the mixture was dried and crushed to form the silicone resin. The softening point of the silicone resin was tested to be 51.6 °C.

### Comparative example 3

Comparative Example 3 was made based on Example 1. The difference between Comparative Example 3 and Example 1 was that, the synthesis process of modified silver powder was as follows:
50 g of silicone resin and 2000 g of toluene were stirred and dissolved; 1000 g of silver powder with a D50 value of 2 µm was added to obtain a mixture; and the mixture was stirred at room temperature for 8 h, dried, and ground and crushedto obtain the modified silver powder. A silicone resin with a softening point of 78.9 °C was selected.

The synthesis method of the silicone resin with a softening point of 78.9 °C was as follows: 130 g of octamethylcyclotetrasiloxane, 440 g of diphenyldimethoxysilane, 1500 g of phenyltrimethoxysilane, 800 g of toluene, 29 g of concentrated sulfuric acid, and 510 g of deionized water were mixed and stirred under refluxing at 70 °C for 6 h to obtain a mixed solution; the mixed solution was allowed to stand and cooled to room temperature, then the mixed solution was separated into an oil layer and a water layer, and the water layer was discarded; sodium bicarbonate was added to the oil layer to adjust the pH of the oil layer to 7, and the resultant was stirred at room temperature for 1 h, and filtered to obtain a mixture; and the mixture was dried and crushed to form the silicone resin. The softening point of the silicone resin was tested to be 78.9 °C.

### Comparative example 4

Comparative Example 4 was made based on Example 1. The difference between Comparative Example 4 and Example 1 was that, the synthesis process of modified silver powder was as follows:
50 g of above-prepared silicone resin with a softening point of 65.2°C and 2000 g of toluene were weighed, and dissolved under stirring, and 1000 g of silver powder with a D50 value of 8 µm was added to obtain a mixture; and the mixture was stirred at room temperature for 8 h, dried, ground and crushed to obtain the modified silver powder.

### Comparative example 5

Comparative Example 5 was made based on Example 1. The difference between Comparative Example 5 and Example 1 was that, the synthesis process of modified silver powder was as follows:
30 g of above-prepared silicone resin with a softening point of 65.2°C and 2000 g of toluene were weighed, and dissolved under stirring, and 1200 g of silver powder with a D50 value of 2 µm was added to obtain a mixture; and the mixture was stirred at room temperature for 8 h, dried, ground and crushed to obtain the modified silver powder.

### Comparative example 6

Comparative Example 6 was made based on Example 1. The difference between Comparative Example 6 and Example 1 was that, the synthesis process of modified silver powder was as follows:
70 g of above-prepared silicone resin with a softening point of 65.2°C and 2000 g of toluene were weighed, and dissolved under stirring, and 800 g of silver powder with a D50 value of 2 µm was added to obtain a mixture; and the mixture was stirred at room temperature for 8 h, dried, ground and crushed to obtain the modified silver powder.

The performances of the thermally conductive silicone rubbers prepared in Examples 1-4 and Comparative Examples 1-6 were tested.

Testing of the viscosity of the thermal conductivity silicone rubber:
Apparatus: Anton Paar rheometer
Model: MCR102
Test conditions: 0.2 S⁻¹, 10 min

Testing of the thermal conductivity of the thermal conductivity silicone rubber:
Apparatus: Hot Disk Thermal Constant Analyzer
Test principle: Transient plane heat source method
Sample preparation requirements: 30*30*0.2 mm test samples, curing at 150°C for 2 h.

Testing of the hardness of the cured thermal conductivity silicone rubber:
Apparatus: Shore A hardness tester
Sample preparation requirements: 20*10*20 mm square blocks, curing at 150°C for 2 h.

**Table 1 Performance test results of thermally conductive silicone rubbers prepared by Examples 1-4 and Comparative examples 1-6**

| | Viscosity/mPa•s | Thermal conductivity/W(m•K) | Hardness after thermocuring/A |
|---|---|---|---|
| Example 1 | 60580 | 10.03 | 50 |
| Example 2 | 72860 | 13.66 | 67 |
| Example 3 | 85700 | 15.21 | 80 |
| Example 3 | 99860 | 17.88 | 95 |
| Comparative Example 1 | 863000 | 2.33 | 53 |
| Comparative Example 2 | 56920 | 7.67 | 48 |
| Comparative Example 3 | 108500 | 6.33 | 49 |
| Comparative Example 4 | 110600 | 3.56 | 57 |
| Comparative Example 5 | 220530 | 7.22 | 52 |
| Comparative Example 6 | 51450 | 3.13 | 49 |

From the comparison between the examples and the comparative examples, it may be seen that, the thermally conductive silicone rubbers prepared by the present invention have a suitable viscosity, so as to ensure that the fluidity of the thermally conductive silicone rubbers before curing meets the requirements for use, and they also have a relatively high thermal conductivity. The thermally conductive silicone rubbers prepared by the present invention have a wide range of applications.

It should be noted that, the above-mentioned examples are only used to explain the present invention, but do not constitute any limitation on the present invention. The present invention has been described with reference to typical examples, but it should be understood that the terms used therein are descriptive and explanatory vocabularies, rather than limiting vocabularies. Modifications may be made to the present invention within the scope of the claims of the present invention, and revisions may be made to the present invention without departing from the scope and spirit of the present invention. Although the present invention described herein relates to specific methods, materials, and examples, it does not mean that the present invention is limited to the specific examples disclosed therein. On the contrary, the present invention may be extended to all the other methods and applications with the same functionality.

## Claims

1. A thermally conductive silicone rubber, **characterized in that**, the thermally conductive silicone rubber comprises: vinyl terminated polydimethylsiloxane, vinyl MQ silicone resin, hydrogen-containing silicone oil, ethynyl cyclohexanol, modified silver powder; wherein the modified silver powder is a mixture containing silicone resin and silver powder.

2. The thermally conductive silicone rubber of claim 1, **characterized in that**, the thermally conductive silicone rubber has a thermal conductivity of 10-18 W/(m•K); the cured thermally conductive silicone rubber has a hardness of 50-95 A; and at a temperature of 25 °C and a shear rate of 0.2 S⁻¹, the thermally conductive silicone rubber has a shear viscosity of 60000-100000 mPa•s.

3. The thermally conductive silicone rubber of claim 1 or 2, **characterized in that**, at a temperature of 25 °C, the vinyl terminated polydimethylsiloxane has a dynamic viscosity of 200-500000 mPa•s, preferably 3000-20000 mPa•s;
and/or, the vinyl MQ silicone resin has a vinyl content of 0.0006-0.002 mol/g;
and/or, a molar ratio of M units to Q units in the vinyl MQ silicone resin is 0.9-1.1.

4. The thermally conductive silicone rubber of claim 1 or 2, **characterized in that**, the silicone rubber comprises: 60-80 parts by mass of vinyl terminated polydimethylsiloxane, 20-40 parts by mass of vinyl MQ silicone resin, 3-5 parts of hydrogen-containing silicone oil, 0.008-0.012 parts of ethynyl cyclohexanol, and 350-700 parts of modified silver powder.

5. The thermally conductive silicone rubber of any one of claims 1-3, **characterized in that**, a mass content of hydrogen in the hydrogen-containing silicone oil is 1.1% to 1.3%;
and/or, at a temperature of 25°C, the hydrogen-containing silicone oil has a dynamic viscosity of 10-200 mPa•s, preferably 15-50 mPa•s.

6. The thermally conductive silicone rubber of any one of claims 1-5, **characterized in that**, the modified silver powder comprises 4-6 parts by mass of silicone resin and 80-120 parts by mass of silver powder.

7. The thermally conductive silicone rubber of claim 6, **characterized in that**, a method for preparing the modified silver powder comprises: mixing the silicone resin, a solvent, and the silver powder, drying the resultant, and grinding to obtain the modified silver powder; wherein,
preferably, the solvent is toluene;
preferably, the silver powder has a D50 value of 1-5 µm; and
preferably, a time for the grinding is 8-10 h.

8. The thermally conductive silicone rubber of any one of claims 1-7, **characterized in that**, the silicone resin has a softening point of 60-70°C;
and/or, the silicone resin is a reaction product of octamethylcyclotetrasiloxane, diphenyldimethoxysilane, and phenyltrimethoxysilane; and
preferably, a mass ratio of the octamethylcyclotetrasiloxane, diphenyldimethoxysilane, and phenyltrimethoxysilane may be 120-140:420-460:800-1200.

9. The thermally conductive silicone rubber of claim 8, **characterized in that**, a method for preparing the silicone resin comprises:
(1) mixing and stirring the octamethylcyclotetrasiloxane, diphenyldimethoxysilane, phenyltrimethoxysilane, toluene, concentrated sulfuric acid, and water to obtain a mixed solution;
(2) allowing the mixed solution to stand to separate into an oil layer and a water layer, discarding the water layer, adjusting pH value of the oil layer, and filtering the resultant, drying, and crushing to obtain the silicone resin; wherein,
preferably, the water is deionized water or distilled water;
preferably, the concentrated sulfuric acid has a concentration of 97 wt% to 99 wt%;
preferably, the stirring is stirring at reflux, and the stirring at reflux is performed under conditions of: at a temperature of 70-80°C for 5-7 h;
and/or, the pH value of the oil layer is adjusted to 6.5-7.5.

10. A method for preparing the thermally conductive silicone rubber of any one of claims 1 to 9, **characterized in that**, the method comprises: mixing the vinyl terminated polydimethylsiloxane, vinyl MQ silicone resin, hydrogen-containing silicone oil, ethynyl cyclohexanol, and modified silver powder in the presence of a catalyst to obtain the thermally conductive silicone rubber.

11. The method for preparing the thermally conductive silicone rubber of claim 10, **characterized in that**, the catalyst is a platinum complex, and the catalyst is used in an amount that a mass of platinum is 15-40 ppm of a total mass of other components in the thermally conductive silicone rubber except for the modified silver powder;
and/or, a time for the mixing is 0.2-0.5 h.
